# EUROPÄISCHE PATENTANMELDUNG

(11) **EP 4 325 719 A1**
(43) Veröffentlichungstag der Anmeldung: **21.02.2024**
(21) Anmeldenummer: 23191889.7
(22) Anmeldetag: 17.08.2023
(51) Int. Cl.: H02S 20/23

(54) **ANORDNUNG ZUM AUFNEHMEN UND FESTLEGEN ZUMINDEST EINES TECHNISCHEN BAUELEMENTES, INSBESONDERE ZUMINDEST EINES PHOTOVOLTAIKELEMENTES**

(30) Priorität: 18.08.2022 DE 102022120884
(71) Anmelder: Sunkon GmbH, 31553 Sachsenhagen (DE)
(72) Erfinder: Seipel, Petric, 31515 Wunstorf (DE)
(74) Vertreter: Jabbusch, Matthias

(57) **Zusammenfassung**

Bei einer Anordnung zum Aufnehmen und Festlegen zumindest eines technischen Bauelementes, insbesondere zumindest eines Photovoltaikelementes in oder oberhalb einer Dachfläche, mit wenigstens einem profilförmigen Formteil und mit zumindest einem am Formteil gehaltenen Aufnahmeteil für das Bauelement ist vorgesehen, dass das Aufnahmeteil am Formteil höhenveränderlich gehalten ist.

## Beschreibung

Die Erfindung betrifft eine Anordnung zum Aufnehmen und Festlegen zumindest eines technischen Bauelementes, insbesondere zumindest eines Photovoltaikelementes in oder oberhalb einer Dachfläche, mit wenigstens einem profilförmigen Formteil und mit zumindest einem am Formteil gehaltenen Aufnahmeteil für das Bauelement.

Regelmäßig sind technische Bauelemente aufzunehmen und festzulegen. Bei Photovoltaikelementen kommt es darauf an, diese lagesicher und lastenfest innerhalb oder unmittelbar oberhalb einer Dachfläche anzuordnen.

Dazu sind bereits profilförmige Formteile vorgeschlagen worden, die an Sparren des Daches unterhalb der Dachhaut befestigt werden können und die durch die Dachhaut, beispielsweise zwischen einander benachbarten Dachziegeln, hindurchgeführt werden. Diese Formteile können dann technische Bauelemente aufnehmen, dazu ist am Formteil ein Aufnahmeteil für das Bauelement angeordnet. Das Bauelement, beispielsweise ein Photovoltaikelement, wird an das Aufnahmeteil angelegt oder aufgelegt und an diesem Aufnahmeteil häufig auch festgelegt. Das Aufnahmeteil ist seinerseits am Formteil gehalten, über das Formteil wird die Verbindung zum Beispiel zu einem Dachsparren hergestellt.

Photovoltaikelemente werden auf voneinander verschiedene Dächer angebracht. Diese Dächer können Ziegel aus Beton oder Ton aufweisen, es können mit Blechen gedeckte Dächer vorliegen oder auch mit Dachpappe abgedichtete Dächer. Die verschiedenen Dächer bewirken, dass das Bauelemente im Aufnahmeteil durchaus in voneinander verschiedenen Höhen aufzunehmen sind. Im Stand der Technik werden dann Unterlegelemente, wie Scheiben oder Holzklötze, eingesetzt. Bekannt ist auch Höhenverstellungen mittels Langlöchern in Formteilen.

Der Erfindung liegt die Aufgabe zugrunde, eine Anordnung der eingangs genannten Gattung aufzuzeigen, mit der eine Aufnahme eines Bauelementes, insbesondere eines Photovoltaikelementes, auf voneinander verschiedenen Dächern erleichtert ist.

Diese Aufgabe ist erfindungsgemäß dadurch gelöst, dass das Aufnahmeteil am Formteil höhenveränderlich gehalten ist.

Das Bauelement wird bei der erfindungsgemäßen Anordnung stets mit dem Aufnahmeteil verbunden. Erfindungsgemäß ist vorgesehen, dass dieses Aufnahmeteil am Formteil höhenveränderlich gehalten ist, dadurch wird auch eine Höhenveränderlichkeit des aufgenommenen Bauelementes gegenüber dem Formteil hergestellt. Das in voneinander verschiedenen Höhen anzuordnende Bauelement kann somit an Ausgestaltungen einer Dachfläche angepasst werden.

Nach einer ersten Weiterbildung der Erfindung ist vorgesehen, dass das Aufnahmeteil eine Konsole zum Auflegen und Festlegen des Bauelementes hat. Die Konsole ist ein Baukörper, auf den das Bauelement aufgelegt werden kann. Die Konsole kann dabei Festlegungsmittel aufweisen, um eine lagefeste Zuordnung des Bauelementes zur Konsole zu erreichen.

Eine nächste Weiterbildung der Erfindung sieht vor, dass die Anordnung ein Klemmorgan aufweist, mit dem das Aufnahmeteil am Formteil lagefest befestigbar ist. Das Halten des Aufnahmeteils am Formteil wird nach dieser Weiterbildung durch ein Klemmorgan realisiert. Das Klemmorgan ist Teil der Anordnung, da es in verschiedenen Bauteilen zugeordnete Abschnitte aufweist.

So sieht eine Weiterbildung der Erfindung vor, dass das Klemmorgan eine Hinterschneidung in der Konsole und einen Durchbruch in dem Formteil umfasst und dass mit der Hinterschneidung und mit dem Durchbruch in anliegende Halteverbindung bringbare Klemmelemente aufweist. Das Klemmorgan umfasst bestimmte Bauformen in Konsole und Durchbruch. Die Konsole des Aufnahmeteils hat eine Hinterschneidung, während das Formteil mit einem Durchbruch versehen ist. Weiter sind die Klemmelemente vorhanden. Diese Klemmelemente sind mit der Hinterschneidung in der Konsole und mit dem Durchbruch in dem Formteil jeweils in anliegende Halteverbindung bringbar, auf diese Weise verbinden die Klemmelemente die Konsole des Aufnahmeteils und den Durchbruch des Formteils miteinander.

Dabei kann vorgesehen sein, dass die Hinterschneidung in der Konsole als U-Profil mit zueinander abgewinkelten Enden der U-Schenkel ausgebildet ist. Ein U-Profil hat U-Schenkel, wenn die Enden der U-Schenkel zueinander abgewinkelt werden, dann bilden sich zu beiden Seiten Hinterschneidungen aus.

Eine nächste Weiterbildung der Erfindung sieht vor, dass die Klemmelemente flache quaderförmige Profilkörper sind, die jeweils an einer kürzeren Stoßkante Einhängeabschnitte zum Einhängen in das U-Profil der Konsole haben. Die Verbindung der Klemmelemente mit der Konsole erfolgt dann konstruktiv über die Einhängeabschnitte der als Profilkörper ausgebildeten Klemmelemente. Das Einhängen bewirkt eine zugfeste Verbindung.

Weiter kann vorgesehen sein, dass in einander gegenüberliegenden Wänden des Durchbruchs im Formteil Fasen eingebracht sind. Fasen stellen schmale Abschnitte zur Verfügung, an die sich andere Bauteile anlegen können. So sieht eine Weiterbildung der Erfindung vor, dass die Profilkörper an ihren im eingehängten Zustand außenliegenden Lagerflächen Anlagebereiche zum Anlegen an die Fasen im Durchbruch des Formteils aufweisen. Die Verbindung zwischen Formteil und Klemmelemente erfolgt über die Anlage der Profilkörper an den Fasen im Durchbruch des Formteils. Diese kann formschlüssig erfolgen, insbesondere dann, wenn die Anlagebereiche im Vertikalschnitt zahnartig ausgebildet sind.

Da die Profilkörper als flache Quader eine bestimmte Baulänge haben, können mehrere Zähne an ihren Außenseiten vorgesehen sein. Die Anlage zum Beispiel eines Zahntals zwischen zwei Zähnen an der Fase des Durchbruchs des Formteils kann dann wahlfrei und bei vertikaler Ausrichtung der Profilkörper in voneinander verschiedener Höhe erfolgen. Mit den Profilkörpern wird die Konsole, in der die Profilkörper eingehängt sind, mehr oder weniger weit an das Formteil herangeführt, je nachdem, welcher Abschnitt der Profilkörper an der Fase im Durchbruch des Formteils anliegt.

Eine nächste Weiterbildung sieht dann vor, dass die Profilkörper an ihren im eingehängten Zustand innenliegenden Lagerflächen jeweils einen Vorsprung mit Anlaufschräge haben und dass durch einen Durchbruch in der Konsole ein Bolzenelement in den Bereich zwischen den Profilkörpern bringbar ist. Mit dem eingebrachten Bolzenelement, der beispielsweise eine Schraube mit verdicktem Abschnitt seiner Längserstreckung ist, wird ein Element zwischen die eingehängten Profilkörper gebracht. Aufgrund der vorhandenen Vorsprünge an den innenliegenden Lagerflächen der Profilkörper und der gegebenen Anlaufschräge wird mit Hilfe des Bolzenelementes eine Kraft nach außen ausgebildet. Das Bolzenelement läuft z. B. von oben auf die Anlaufschräge auf und drückt durch ein weiteres Einführen die Profilkörper nach außen. Die an der Außenseite der Profilkörper angeordneten Anlagebereiche werden an die Fasen im Durchbruch des Formteils angelegt und an diese form- und kraftschlüssig angepresst. Nach einer Fixierung des Bolzenelementes ist die Konsole über das Klemmorgan mit dem Formteil lagefest verbunden. Die Höheneinstellung erfolgt dabei über ein mehr oder weites Vorstehen der Profilkörper im Durchbruch des Formteils.

Ein Ausführungsbeispiel der Erfindung ist in der Zeichnung dargestellt. Es zeigen:
- Figur 1:: eine Teilschnittansicht eines Satteldaches mit einem profilförmigen Formteil;
- Figur 2:: eine Seitenansicht der erfindungsgemäßen Anordnung,
- Figur 3 und Figur 3a:: eine Teilschnittansicht der Anordnung gemäß Figur 2 in einem ersten Höhenzustand, und
- Figur 4 und Figur 4a:: eine weitere Seitenansicht der Anordnung gemäß Figur 2 in einem zweiten Höhenzustand.

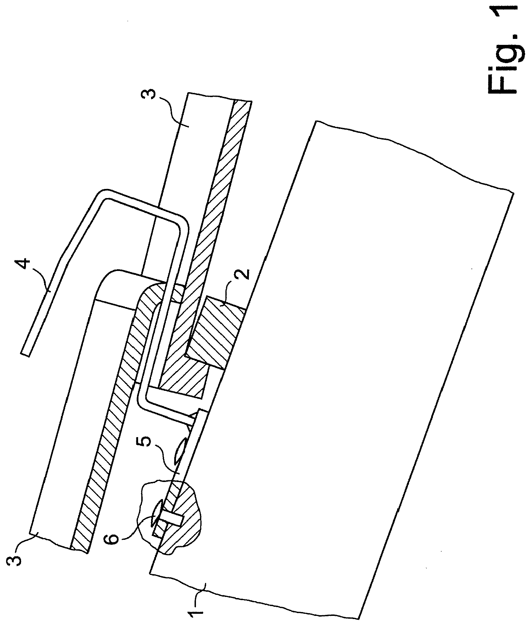

Das Dach in Figur 1 ist mit einem Dachsparren 1, einer auf dem Dachsparren 1 aufgebrachten Dachlatte 2 und Dachziegeln 3 dargestellt. Da oberhalb der Dachziegel 3 auf diesem Dach nicht weiter dargestellte Photovoltaikelemente installiert werden sollen, sind profilförmige Formteile 4 für die Photovoltaikelemente anzubringen.

Figur 1 zeigt ein Formteil 4 aus dem Stand der Technik, dieses ist mit Hilfe einer Schweißung an eine Platte 5 angeschweißt, die mit Hilfe von Schrauben 6 an den Dachsparren 1 angeschraubt ist.

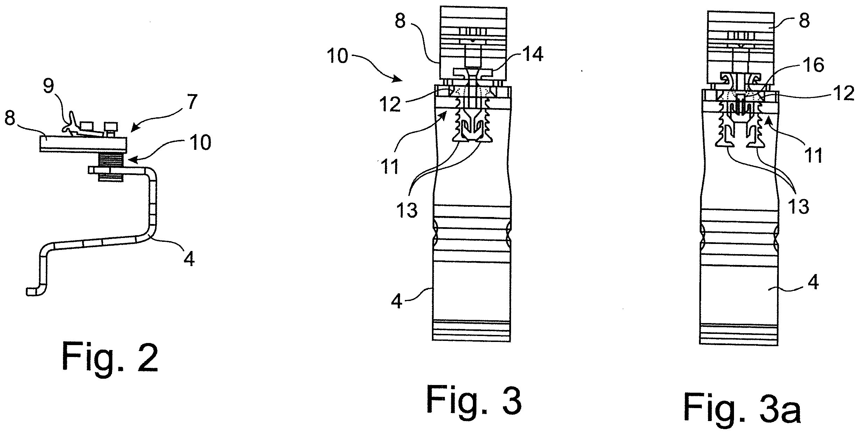

Auch die in Figur 2 dargestellte erfindungsgemäße Anordnung hat ein profilförmiges Formteil 4. Auch dieses wird an einem Dachsparren 1 befestigt, dabei kann es durch Dachziegel 3 hindurchgeführt werden.

Teil der erfindungsgemäßen Anordnung ist auch ein Aufnahmeteil 7, das an dem Formteil 4 höhenveränderlich gehalten ist. Das Aufnahmeteil 7 ist eine Konsole 8, die zumindest abschnittsweise als U-Profil ausgebildet ist. Die Konsole 8 trägt Befestigungselemente 9 für ein Photovoltaikelement.

Die Verbindung zwischen Aufnahmeteil 7 und Formteil 4 erfolgt über zumindest ein Klemmorgan 10.

Figur 3 zeigt Einzelteile dieses Klemmorgans 10. Es ist erkennbar, dass die Konsole 8 als U-Profil mit zueinander abgewinkelten Enden der U-Schenkel ausgebildet ist. Das Formteil 4 weist dagegen einen Durchbruch 11 auf, in die Wandung des Durchbruchs ist eine Fase 12 eingearbeitet. Weiterhin sind zwei Profilkörper 13 vorgesehen, die als flache Quader ausgebildet sind. Sie haben Einhängeabschnitte 14, mit denen sie sich in das U-Profil der Konsole 8 einhängen. Figur 3 zeigt dabei den entspannten Zustand des Klemmorgans, die Profilkörper 13 sind einander angenähert und können durch den Durchbruch 11 mit Fase 12 geführt werden. Figur 3a zeigt, dass zwischen die Profilkörper 13 ein Bolzenelement 16 eingeführt ist. Die Profilkörper 13 werden nach außen gedrückt, sie legen sich mit ihren äußeren sägezahnartigen Außenseiten an die Fase 12 im Durchbruch 11 und an die Oberseite des Formteils 4 an. Wird das Bolzenelement 16 fixiert, ist eine feste Verbindung zwischen Konsole 8 und Formteil 4 gegeben, dabei befindet sich die Konsole 8 in unmittelbarer Auflage auf der Konsole 4, also in einer niedrigen Position.

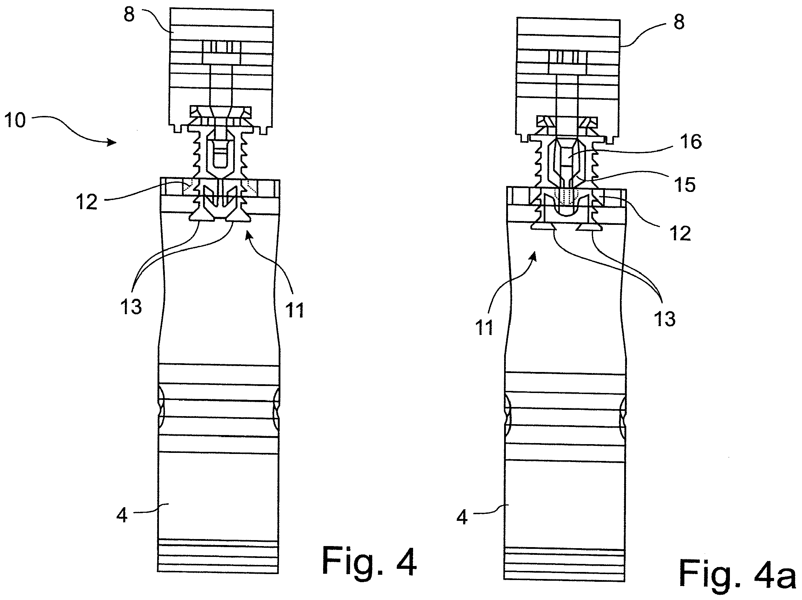

In Figuren 4 und 4a ist die Konsole 8 höher angeordnet. Das Klemmorgan 10 ist in einem weiter aus dem Formteil 4 herausgezogenen Zustand. Figur 4 zeigt wieder den entspannten Zustand der Profilkörper 13. Sie können aufgrund ihres Abstandes zur Fase 12 nach oben aus dem Profilteil 4 herausgezogen werden.

In Figur 4a ist das Bolzenelement 16 in den Zwischenraum zwischen den Profilteilen 13 eingeführt. Es läuft gegen von der Konsole 8 heransteigende Anlaufschrägen 15 und drückt die Profilkörper 13 nach außen. Mit einer aufgeweiteten Verlängerung drückt das Bolzenelement 16 zudem die freien Enden der Profilteile 13 nach außen. Die sägezahnartigen Oberflächen der Profilkörper 13 verbinden sich form- und kraftschlüssig mit den Fasen 12 des Durchbruchs 11 und mit dem Formteil 4, so dass die feste Verbindung zwischen Konsole 8 und Formteil 4 hergestellt ist. Die Konsole 8 befindet sich in Figuren 4 und 4a aber in einer gegenüber der Darstellung in Figuren 3 und 3a höheren Position.

## Patentansprüche

1. Anordnung zum Aufnehmen und Festlegen zumindest eines technischen Bauelementes, insbesondere zumindest eines Photovoltaikelementes in oder oberhalb einer Dachfläche, mit wenigstens einem profilförmigen Formteil und mit zumindest einem am Formteil gehaltenen Aufnahmeteil für das Bauelement,
**dadurch gekennzeichnet,**
**dass** das Aufnahmeteil (7) am Formteil (4) höhenveränderlich gehalten ist.

2. Anordnung nach Anspruch 1, **dadurch gekennzeichnet, dass** das Aufnahmeteil (7) eine Konsole (8) zum Auflegen und Festlegen des Bauelementes hat.

3. Anordnung nach Anspruch 1 oder 2, **dadurch gekennzeichnet, dass** sie zumindest ein Klemmorgan (10) aufweist, mit dem das Aufnahmeteil (7) am Formteil (4) lagefest befestigbar ist.

4. Anordnung nach Anspruch 2 und 3, **dadurch gekennzeichnet, dass** das Klemmorgan (10) eine Hinterschneidung in der Konsole (9) und einen Durchbruch (11) in dem Formteil (4) umfasst und dass mit der Hinterschneidung und mit dem Durchbruch (11) in anliegende Halteverbindung bringbare Klemmelemente aufweist.

5. Anordnung nach Anspruch 4, **dadurch gekennzeichnet, dass** die Hinterschneidung in der Konsole (8) als U-Profil mit zueinander abgewinkelten Enden der U-Schenkel ausgebildet ist.

6. Anordnung nach Anspruch 5, **dadurch gekennzeichnet, dass** die Klemmelemente flache quaderförmige Profilkörper (13) sind, die jeweils an einer kürzeren Stoßkante Einhängeabschnitte (14) zum Einhängen in das U-Profil der Konsole (8) haben.

7. Anordnung nach einem der Ansprüche 4 bis 6, **dadurch gekennzeichnet, dass** in einander gegenüberliegenden Wänden des Durchbruchs (11) im Formteil (4) Fasen (12) eingebracht sind.

8. Anordnung nach Anspruch 7, **dadurch gekennzeichnet, dass** die Profilkörper (13) an ihren im eingehängten Zustand außenliegenden Lagerflächen Anlagebereiche zum Anlegen an die Fasen (12) im Durchbruch (11) des Formteils (4) aufweisen.

9. Anordnung nach Anspruch 8, **dadurch gekennzeichnet, dass** die Anlagebereiche im Vertikalschnitt zahnartig ausgebildet sind.

10. Anordnung nach einem der Ansprüche 7 bis 9, **dadurch gekennzeichnet, dass** die Profilkörper (13) an ihren im eingehängten Zustand innenliegenden Lagerflächen jeweils einen Vorsprung mit Anlaufschräge (15) haben und dass durch einen Durchbruch in der Konsole (8) ein Bolzenelement (16) in den Bereich zwischen den Profilkörpern (13) bringbar ist.
